# EUROPEAN PATENT APPLICATION

(11) **EP 1 818 803 A2**
(43) Date of publication of application: **15.08.2007**
(21) Application number: 07250214.9
(22) Date of filing: 19.01.2007
(51) Int. Cl.: G06F 3/12

(54) **Authenticated printing apparatus and method and authenticated printing system**

(30) Priority: 20.01.2006 JP 2006012016
(71) Applicant: SEIKO EPSON CORPORATION, Shinjuku-ku Tokyo 163-0811 (JP)
(72) Inventor: Mokuya, Senichi, Suwa-shi Nagano-ken 392-8502 (JP); Takahashi, Yusuke, Suwa-shi Nagano-ken 392-8502 (JP)
(74) Representative: Cloughley, Peter Andrew

(57) **Abstract**

An authenticated printing apparatus issues a request for a print job to a job holding apparatus that stores print jobs in association with job-specific information, the print job corresponding to job-specific information obtained from an authenticated user, and executes printing on the basis of the print job obtained in response to the request. The authenticated printing apparatus includes a first list storing unit that stores first list information of job holding apparatuses as destinations of requests for print jobs; a first list creating unit that carries out simultaneous communications to check for presence of job holding apparatuses via a communication network and creates the first list information on the basis of results of the simultaneous communications; and a requesting unit that issues a request for a print job to a print-job holding apparatus registered in the first list information with reference to the first list storing unit, the print job corresponding to job-specific information obtained from an authenticated user.

## Description

The invention relates to authenticated printing techniques for executing printing on condition of success of authentication.

A framework called authenticated printing, in which printing is permitted only when authentication with an authentication device succeeds to prevent leakage of information, has been known. For example, according to a scheme disclosed in Japanese Patent No. 3,034,160, when a confidential document is printed, instead of immediately executing printing in response to a printing instruction, rendered image data based on print data is stored in a printing apparatus, and printing is executed on the basis of the image data on condition of execution of user authentication. Furthermore, according to a scheme disclosed in JP-A-2004-118232, print data for authenticated printing is stored in a server, and when authentication information is received from a printer, corresponding print data is transmitted to the printer.

Various schemes for executing authenticated printing via authenticated printing servers have hitherto been proposed, as in JP-A-2004-118232. However, the following problems that arise when a plurality of authenticated printing servers exists within a communication network, for example, in a case where a plurality of client PCs have functions of authenticated printing servers, have not been sufficiently considered.

When a plurality of authenticated printing servers exists in a communication network, a printer is not aware as to which server holds print data corresponding to authentication information input from a user. Thus, the printer has to query each of the plurality of authenticated printing servers as to the presence or absence of print data corresponding to the authentication information.

In this case, presumably, the user specifies a query destination, or a query is issued by broadcasting or multicasting within a predetermined network segment when executing authenticated printing.

However, it is laborious for the user to specify all the print-job holding apparatuses at query destinations. Furthermore, when broadcasting or multicasting is executed within the segment each time authenticated printing is executed, CPU resources of computers on the network are wasted. This increases the load on the network.

An advantage of some aspects of the invention is that it is possible to provide a framework for efficiently executing authenticated printing while restraining communication load in a case where a plurality of authenticated printing servers exists within a communication network.

According to an aspect of the invention, there is provided an authenticated printing apparatus that issues a request for a print job to a job holding apparatus that stores print jobs in association with job-specific information, the print job corresponding to job-specific information obtained from an authenticated user, and that executes printing on the basis of the print job obtained in response to the request. The authenticated printing apparatus includes a first list storing unit that stores first list information of job holding apparatuses as destinations of requests for print jobs; a first list creating unit that carries out simultaneous communications to check for presence of job holding apparatuses via a communication network and creates the first list information on the basis of results of the simultaneous communications; and a requesting unit that issues a request for a print job to a print-job holding apparatus registered in the first list information with reference to the first list storing unit, the print job corresponding to job-specific information obtained from an authenticated user. The job-specific information preferably includes at least one of a user name, a password, a file name, a date and time of job generation, and a print property.

The first list creating unit preferably creates the first list information on the basis of at least one of a timing of power-on of the authenticated printing apparatus, a timing of a first print-job request after the power-on of the authenticated printing apparatus, and a timing of elapse of a predetermined time since last creation of first list information.

According to the configuration described above, the user need not specify a destination of a request for a print job each time. Furthermore, once an acknowledge request is issued and list information is created, print-job requests can be sent on the basis of the first list information, so that broadcasting or multicasting need not be executed each time authenticated printing is executed. This serves to reduce consumption of CPU resources of computers on the network.

Preferably, the authenticated printing apparatus further includes a second list storing unit that stores second list information of job holding apparatuses as destinations of requests for print jobs; and a second list creating unit that creates the second list information on the basis of job-holding-apparatus information input by a user when a creating instruction from the user is received. In this case, the requesting unit issues a request for a print job to a print-job holding apparatus among the print-job holding apparatuses registered in the first list information and the print-job holding apparatuses registered in the second list information with reference to the first list storing unit and the second list storing unit, the print job corresponding to job-specific information obtained from an authenticated user.

According to this configuration, it also becomes possible to execute authenticated printing using a job holding apparatus existing outside of a segment or the like in which an acknowledge request is delivered.

Furthermore, preferably, the authenticated printing apparatus further includes a list updating unit that registers or removes information of a job holding apparatus in or from the first list information stored in the first list storing unit when a request for registration in or removal from the first list information is received from the job holding apparatus.

According to this configuration, even when a job holding apparatus is activated after the authenticated printing apparatus creates first list information so that the device configuration on the network changes, the first list information can be updated in accordance with the change. Furthermore, since the job holding apparatus that has caused a change in the device configuration on the network acts as a trigger for updating the first list information, the first list information can be updated timely with minimum communications, so that the load on the network can be restrained.

According to another aspect of the invention, there is provided an authenticated printing system including the authenticated printing apparatus described above and a plurality of the print-job holding apparatuses. Each of the plurality of the print-job holding apparatuses sends a request for registration in the first list information to the authenticated printing apparatus on the basis of at least one of a timing of power-on of the print-job holding apparatus, a timing of storage of a first print job after the power-on of the print-job holding apparatus, and a timing of elapse of a predetermined time since a last request for registration.

According to another aspect of the invention, there is provided an authenticated printing system including the authenticated printing apparatus described above and a plurality of the print-job holding apparatuses. Each of the plurality of the print-job holding apparatuses sends a request for removal from the first list information to the authenticated printing apparatus on the basis of a timing of power-off of the print-job holding apparatus or a timing of turn-off of a function for sending a print job to the authenticated printing apparatus.

According to another aspect of the invention, there is provided an authenticated printing method in which a request for a print job is issued to a job holding apparatus that stores print jobs in association with job-specific information, the print job corresponding to job-specific information obtained from an authenticated user, and in which printing is executed on the basis of the print job obtained in response to the request. The authenticated printing method includes carrying out simultaneous communications to check for presence of job holding apparatuses via a communication network; creating list information of job holding apparatuses as destinations of requests for print jobs on the basis of results of the simultaneous communications and storing the list information in list storing unit; and issuing a request for a print job to a print-job holding apparatus registered in the list information with reference to the list storing unit, the print job corresponding to job-specific information obtained from an authenticated user.

The authenticated printing method can be executed, for example, by an information processing unit (computer) included in an authenticated printing apparatus. A program for this purpose can be installed or loaded via various types of media, such as a CD-ROM, a magnetic disk, a semiconductor memory, or a communication network. Also, the program may be recorded on a printer card or a printer option board for distribution.

According to some aspects of the invention, it is possible to provide a framework for efficiently executing authenticated printing while restraining communication load in a case where a plurality of print-job holding apparatuses exists within a communication network.

Embodiments of the present invention will be described, by way of example only, with reference to the accompanying drawings, wherein like numbers reference like elements.

Fig. 1 is a block diagram showing the hardware configuration of an authenticated printing system.

Figs. 2A to 2C are block diagrams showing the functional configurations of a host apparatus, a print-job holding server, and a printer apparatus.

Fig. 3 is a flowchart for explaining an address-list creating phase in the authenticated printing system.

Figs. 4A and 4B are flowcharts for explaining an address-list updating phase in the authenticated printing system.

Fig. 5 is a flowchart for explaining a print-job storing phase in the authenticated printing system.

Figs. 6A and 6B are flowcharts for explaining an authenticated-printing executing phase in the authenticated printing system.

Fig. 7 is a diagram showing an example of an address list.

Figs. 8A and 8B are diagram showing an example of an acknowledge request and an example of an acknowledge response.

Fig. 9 is a diagram showing an example of data structure in a print-job storing unit.

### First Embodiment

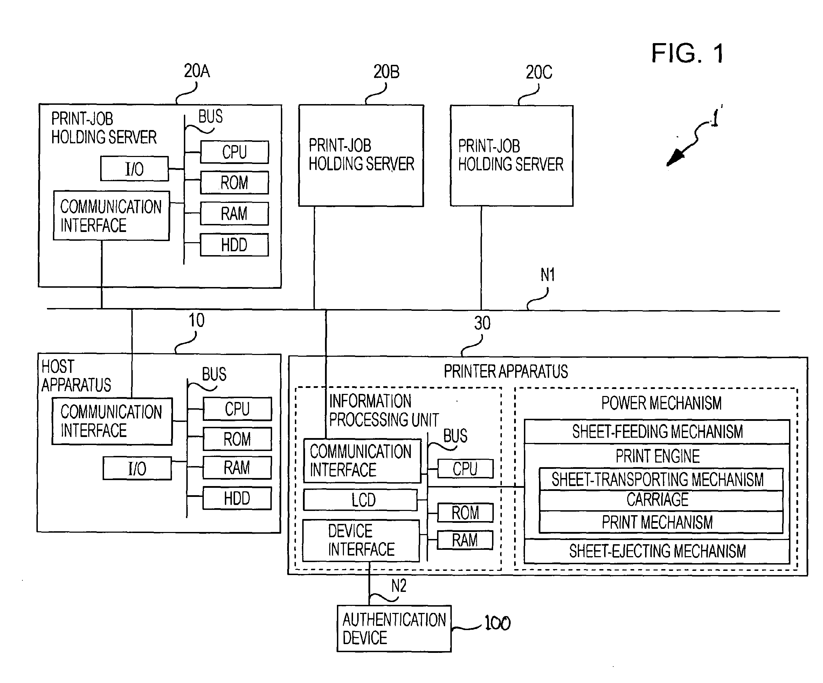

Fig. 1 is a block diagram showing the hardware configuration of an authenticated printing system 1 according to an embodiment of the invention. As shown in Fig. 1, the authenticated printing system 1 includes a host apparatus 10, print-job holding servers 20A to 20C, a printer apparatus 30, and an authentication device 100.

The host apparatus 10, the print-job holding servers 20A to 20C, and the printer apparatus 30 are allowed to communicate each other via a communication network N1. Furthermore, the authentication device 100 is allowed to communicate with the printer apparatus 30 via a communication network N2. The communication networks N1 and N2 may be LANs, the Internet, a leased line, a packet communication network, a combination of these types of networks, or the like, and may be wired or wireless. Although one host apparatus 10, one printer apparatus 30, and one authentication device 100 are shown in Fig. 1, the authenticated printing system 1 may configured to include one or more units corresponding to each of these components depending on design.

The host apparatus 10 includes hardware such as a central processing unit (CPU), a read-only memory (ROM), a random access memory (RAM), an input/output (I/O) controller, a communication interface, and a hard disk drive (HDD). The CPU is allowed to access the individual components via a bus.

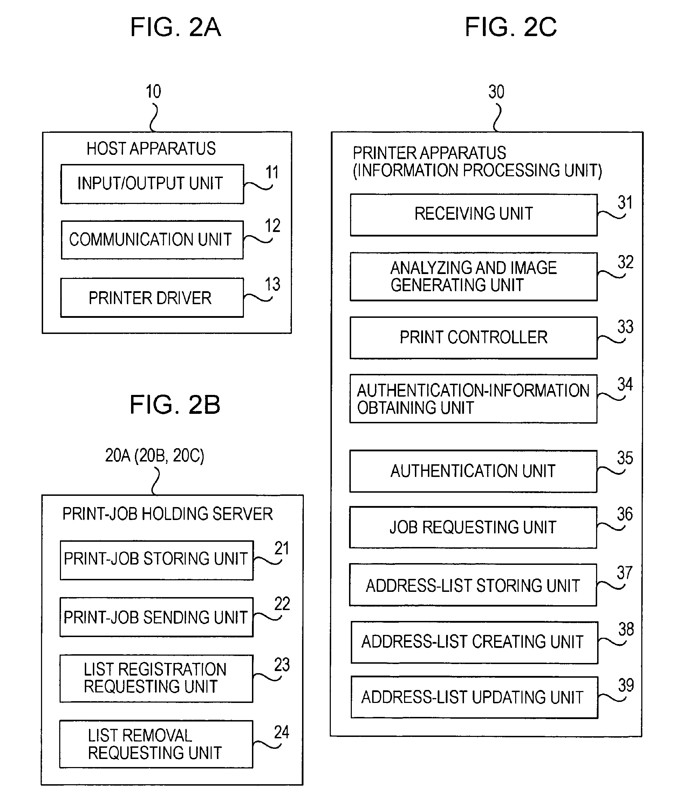

The host apparatus 10 has functions similar to functions of an information processing apparatus such as an ordinary personal computer. For example, the host apparatus 10 includes an input/output unit 11 that accepts various inputs from a user and that outputs information to the user via an I/O controller or the like, a communication unit 12 that sends and receives various data to and from other apparatuses via a communication interface, a printer driver 13 that controls a printer apparatus, and so forth (refer to Fig. 2A). These units are functionally implemented by execution of programs by the CPU, the programs being stored in the ROM, the RAM, or the HDD in the host apparatus 10, an external storage medium, or the like.

The printer driver 13 supports the printer apparatus 30. Similarly to an ordinary printer driver, the printer driver 13 has a function of creating a print job in such a format that a supported printer apparatus can execute a print process. For example, when a print request specifying the printer apparatus 30 is received from an application program running on the host apparatus 10, the printer driver 13 creates a print job based on a printer control language parsable by the printer apparatus 30, and outputs the print job to a print-job holding server 20.

Each print-job holding server 20 includes hardware such as a CPU, a ROM, a RAM, an I/O controller, a communication interface, and an HDD. The CPU is allowed to access the individual components via a bus.

Similarly to an ordinary authenticated printing server, each print-job holding server 20 includes a print-job storing unit 21 that receives a print job for authenticated printing and stores the print job in association with job-specific information, and a print-job sending unit 22 that sends a corresponding print job to the printer apparatus 30 on the basis of a print-job request received from the printer apparatus 30.

However, each print-job holding server 20 in this embodiment differs from an existing authenticated printing server in that it includes a list registration requesting unit 23 that sends a request for registration in an address list to the printer apparatus 30 on the basis of at least one of a timing of power-on of the print-job holding server 20 and a timing of storage of a first print job after the power-on of the print-job holding server 20, and a list removal requesting unit 24 that sends a request for removal from the address list to the printer apparatus 30 on the basis of a timing of power-off of the print-job holding server 20 or a timing of turn-off of a function for sending a print job to the printer apparatus 30 (refer to Fig. 2B).

These units are functionally implemented by execution of programs by the CPU, the programs being stored in the ROM or the RAM in each print-job holding server, an external storage medium, or the like.

The printer apparatus 30 is configured similarly to an ordinary printer apparatus.

For example, the printer apparatus 30 includes a power mechanism including a sheet-feeding mechanism that feeds sheets into the printer apparatus, a print engine that executes printing, and a sheet-ejecting mechanism that ejects sheets to the outside of the printer apparatus. The print engine usually includes a sheet transporting mechanism, a carriage mechanism, and a print head. Various types of print engines supporting various types of printers can be used, for example, serial printers that execute printing character by character, such as ink jet printers or a thermal transfer printers, line printers that execute printing line by line, or page printers that execute printing page by page.

Furthermore, for example, the printer apparatus 30 includes an information processing unit including a CPU, a ROM, a RAM, an LCD panel and an LCD controller, a communication interface, and an interface for an authentication device. The CPU is allowed to access individual components via a bus. For example, the CPU controls the power mechanism to actually execute a print operation according to a print job transmitted via the communication interface. The power mechanism may include a CPU of its own. In that case, the CPU of the power mechanism carries out communications with the CPU of the information processing unit via a parallel interface or the like, thereby controlling the print engine to execute a print operation.

The functions of the information processing unit of the printer apparatus 30 are basically the same as the functions of an information processing unit of an existing printer (refer to Fig. 2C). For example, each printer apparatus 30 includes a receiving unit 31 that receives a print job, an analyzing and image generating unit 32 that analyzes the print job to generate a raster print image corresponding to one band or one page and stores the print image in an image buffer, and a print controller 33 that transfers a print image corresponding to a predetermined unit (e.g., one pass) from the image buffer to the print engine and executes printing while controlling the print engine.

Furthermore, each printer apparatus 30 also has functions of an authenticated printing apparatus, i.e., each printer apparatus 30 further includes an authentication-information obtaining unit 34 that obtains authentication information using the authentication device 100, the authentication information relating to a user wishing to execute authenticated printing, an authentication unit 35 that executes authentication on the basis of the authentication information, and a job requesting unit 36 that issues a request for a print job to a print-job holding server 20, the print job corresponding to job-specific information obtained from an authenticated user.

However, the printer apparatus 30 in this embodiment differs from an existing printing apparatus in that it includes an address-list storing unit 37 that stores an address list of job holding servers 20 as destinations of print-job requests, an address-list creating unit 38 that carries out simultaneous communications to check for the presence of print-job holding servers 20 via the communication network N1 and creates an address list on the basis of the results of the simultaneous communications, and an address-list updating unit 39 that registers or removes information of a print-job holding server 20 issuing a request for registration or removal in or from the address list stored in the list storing unit 37 when the request for registration or removal is received from the print-job holding server 20. The printer apparatus 30 in this embodiment also differs from an existing printing apparatus in that the job requesting unit 36, with reference to the address-list storing unit 37, issues a request for a print job to a print-job holding server 20 registered in the address list, the print job corresponding to the job-specific information obtained from the authenticated user (refer to Fig. 2C).

These units are functionally implemented by execution of programs by the CPU, the programs being stored in the ROM or the RAM in the printer apparatus, an external storage medium, or the like.

The authentication device 100 is, for example, a magnetic-card reader, a fingerprint reader, a barcode reader, or the like. Various types of existing authentication devices may be used depending on design.

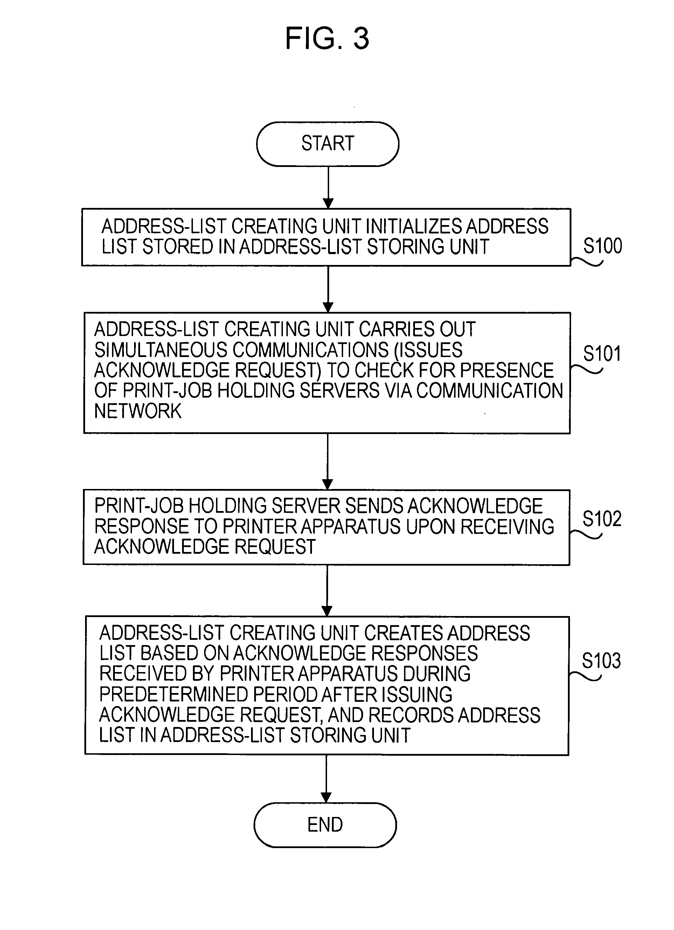

Now, a framework of authenticated printing in the authenticated printing system 1 will be described with reference to flowcharts shown in Figs. 3 to 6B. The steps (including partial steps with no signs assigned thereto) may be executed in different orders or in parallel as desired as long as disruptions do not occur in the processing.

### Address-list creating phase (Fig. 3)

The address-list creating unit 38 of the printer apparatus 30 creates and stores an address list according to the following procedure, as part of an initialization process that is executed on the basis of a timing of power-on of the printer apparatus 30.

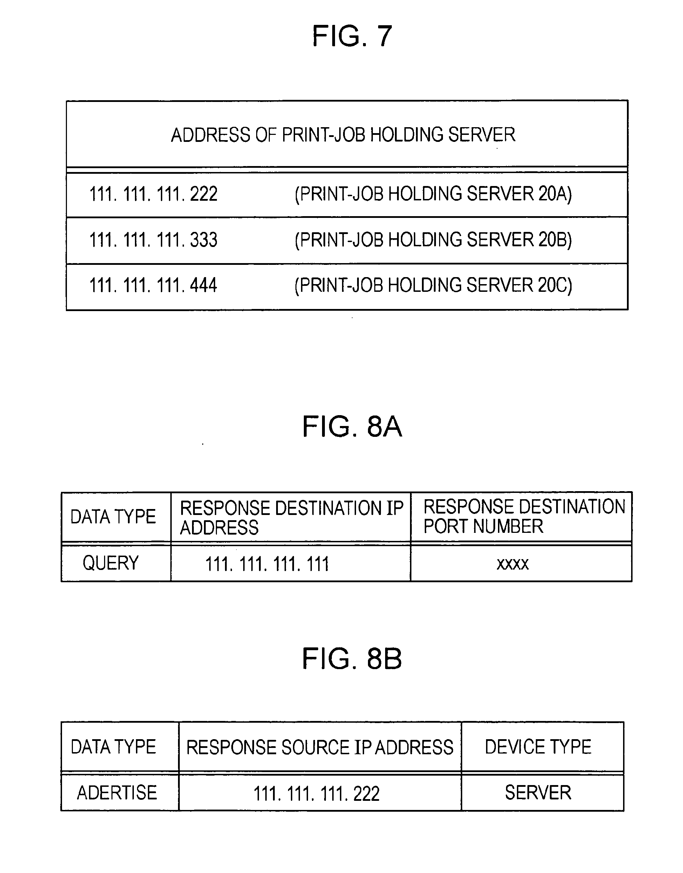

The address list is information listing addresses on the communication network N1 of print-job holding servers 20 as destinations of print-job requests. Fig. 7 shows an example of an address list in a case where the addresses on the communication network N1 are IP addresses.

First, in step S100, the address-list creating unit 38 initializes the address list stored in the address-list storing unit 37.

Then, in step S101, the address-list creating unit 38 carries out simultaneous communications (i.e., issues an acknowledge request) to check for the presence of print-job holding servers 20 via the communication network N1. The acknowledge request can be issued by broadcasting or multicasting.

The acknowledge request at least includes an address (e.g., an IP address and a port number) on the communication network N1 of the printer apparatus 30 as a response destination. Fig. 8A shows an example of data structure of the acknowledge request.

Upon receiving the acknowledge request, in step S102, each print-job holding server 20 that is able to receive the information transmitted by broadcasting or multicasting sends an acknowledge response to the printer apparatus 30. The acknowledge response at least includes an address (e.g., an IP address) on the communication network N1 of the print-job holding server 20 as the source of the response. Fig. 8B shows an example of data structure of the acknowledge response.

In step S103, the address-list creating unit 38 creates an address list on the basis of acknowledge responses received by the printer apparatus 30 during a predetermined period (a period set for timeout) after issuing the acknowledge request, and records the address list in the address-list storing unit 37.

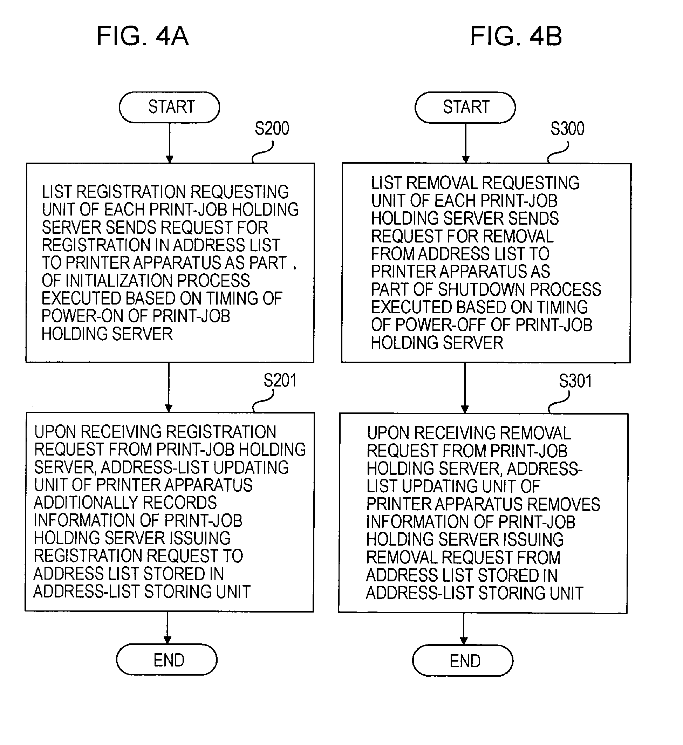

### Address-list updating phase (Figs. 4A and 4B)

In step S200, the list registration requesting unit 23 of each print-job holding server 20 sends a request for registration in the address list to the printer apparatus 30 as part of an initialization process that is executed on the basis of a timing of power-on of the print-job holding server 20. The registration request at least include an address (e.g., an IP address) on the communication network N1 of the print-job holding server 20, and may have basically the same data structure as the acknowledge response. Furthermore, when a plurality of printer apparatuses 30 exists, registration is requested by broadcasting, or the plurality of printer apparatuses 30 is defined as a group and registration is requested by multicasting.

Upon receiving the registration request from the print-job holding server 20, in step S201, the address-list updating unit 39 of the printer apparatus 30 additionally registers information of the print-job holding server 20 issuing the registration request to the address list stored in the address-list storing unit 37.

On the other hand, in step S300, the list removal requesting unit 24 of each print-job holding server 20 sends a request for removal from the address list to the printer apparatus 30 as part of a shutdown process that is executed on the basis of a timing of power-off of the print-job holding server 20. The removal request is configured to include information (e.g., an IP address) that allows identification of the print-job holding server 20. Furthermore, when a plurality of printer apparatuses 30 exists, removal is requested by broadcasting or multicasting, similarly to the registration request.

Upon receiving the removal request from the print-job holding server 20, in step S301, the address-list updating unit 39 of the printer apparatus 30 removes information of the print-job holding server 20 issuing the removal request from the address list stored in the address-list storing unit 37.

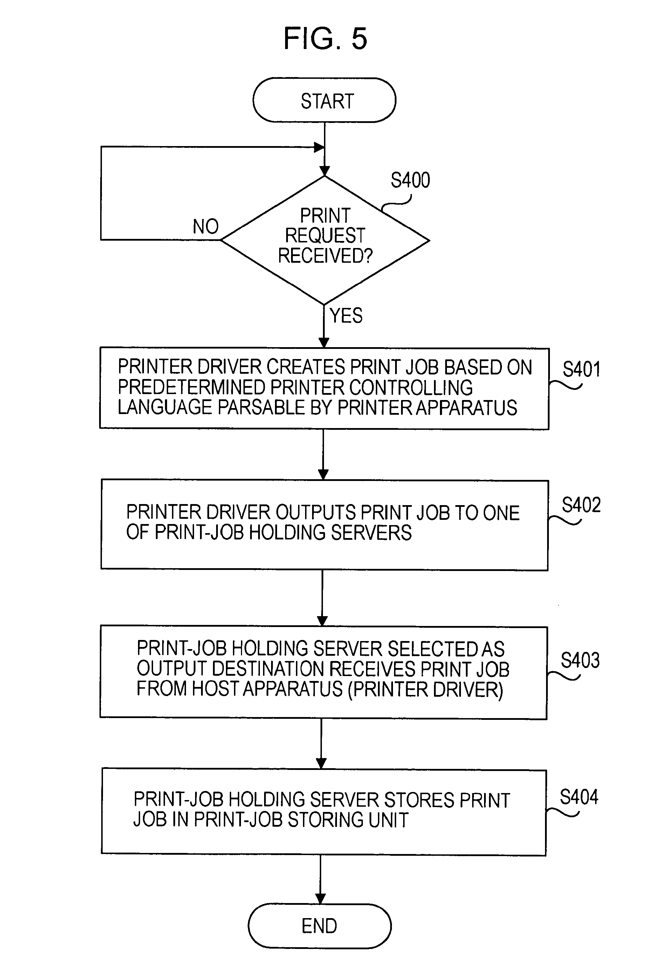

### Print-job storing phase (Fig. 5)

Upon receiving a print request specifying the printer apparatus 30 from an external application program or an application program running on the host apparatus 10 in step S400, in step S401, the printer driver 13 of the host apparatus 10 creates a print job based on a predetermined printer control language parsable by the printer apparatus 30, and in step S402, outputs the print job to one of the print-job holding servers 20A to 20C. As the output destination, a specific print-job holding server 20 may be selected in advance, or one of the print-job holding servers 20 to which output is allowed may be selected according to a predetermined order of priority.

The print job may include, for example, a job ID, information indicating a type of a printer at an output destination, a user name, a document name, authentication information (password or the like), print setting information, and so forth.

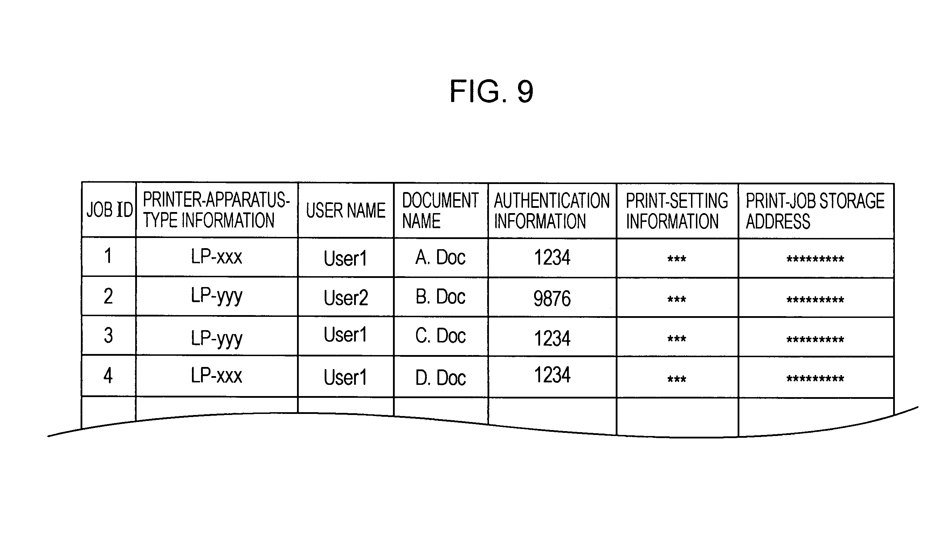

Upon receiving the print job from the host apparatus 10 (the printer driver) in step S403, in step S404, the print-job holding server 20 selected as the output destination of the print job stores the print job in the print-job storing unit 21 thereof. Fig. 9 shows an example of data structure in the print-job storing unit 21.

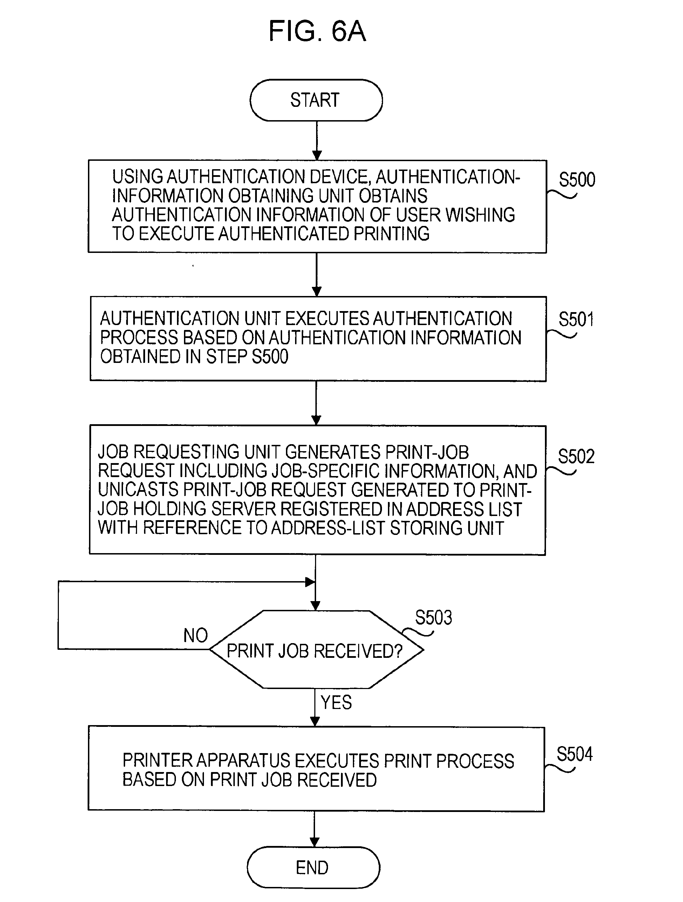

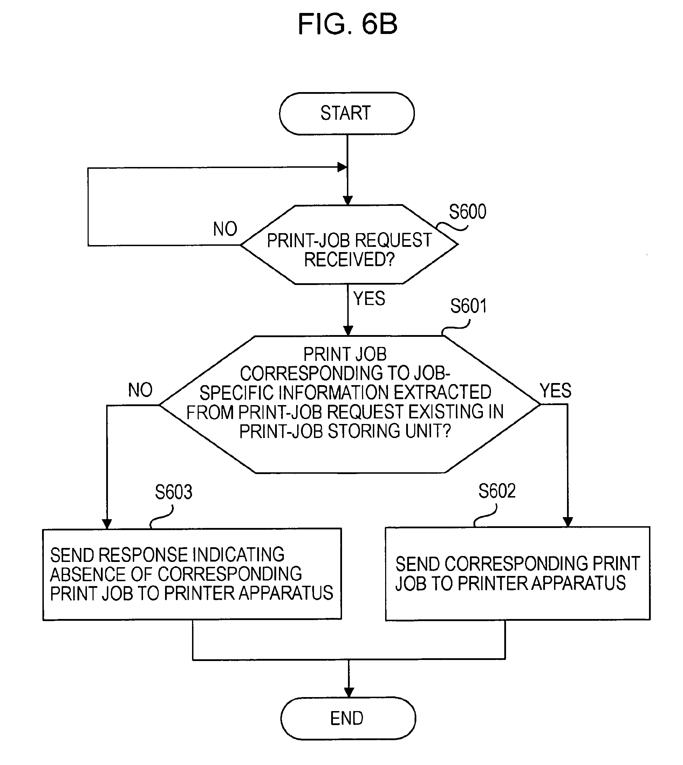

### Authenticated-printing executing phase (Figs. 6A and 6B)

Upon receiving an instruction for executing authenticated printing from a user wishing to execute authenticated printing, the printer apparatus 30 executes an authenticated printing process according to the following procedure.

First, in step S500, using the authentication device 100, from the user wishing to execute authenticated printing, the authentication-information obtaining unit 34 obtains information needed for authentication of the user (authentication information).

For example, when the authentication device 100 is a magnetic card reader, information recorded on an authentication card that is passed through the card reader by the user wishing to execute printing is obtained as authentication information. The specific type of information used as authentication information can be determined in accordance with design. For example, a user name, a user ID (employee ID or the like), or the like can be used. As a part of authentication information, a password or the like may be received from the user wishing to execute printing via the input/output unit 31.

Then, in step S501, the authentication unit 35 executes an authentication process on the basis of the authentication information obtained in step S500.

For example, when the authentication unit 35 is a client of an LDAP authentication service, the authentication unit 35 reports the authentication information obtained to a directory server (not shown) that provides the LDAP authentication service, and receives a result of authentication executed at the directory server on the basis of the report.

Then, in step S502, the job requesting unit 36 generates a print-job request including job-specific information, and unicasts the print-job request to a print-job holding server 20 registered in the address list with reference to the address-list storing unit 37.

The job-specific information preferably includes at least one of a user name, a password, a file name, a date and time of job generation, and a print property (e.g., color/monochrome, single-sided/double-sided, etc.). When job-specific information is included in the authentication information obtained, the job requesting unit 36 generates a print-job request using the job-specific information included. On the other hand, when job-specific information is not included or when the authenticated user wishes to execute printing for a print job of another user, the authentication-information job requesting unit 36 obtains job-specific information of the print job for which the authenticated user wishes to execute printing from the authenticated user, and generates a print-job request.

Print-job requests may be sent sequentially in order of registration in the address list (or in predetermined order of priority) (i.e., a print-request is sent, and after a response therefor is received, a next print-job is sent), or print-job requests may be sent in parallel.

Upon receiving the print-job request in step S600, in step S601, the print-job holding servers 20 registered in the address list (the print-job holding servers 20A to 20C in the example shown in Fig. 7) extract job-specific information from the print-job request and search for a print job corresponding to the job-specific information with reference to the print-job storing unit 21.

Then, in step S602, the print-job holding server 20 holding the corresponding print job (the print-job holding server 20A in the example shown in Fig. 7) reads the print job and sends the print job to the printer apparatus 30.

On the other hand, in step S603, each of the print-job holding servers 20 not holding the corresponding print job (the print-job holding servers 20B and 20C in the example shown in Fig. 7) sends a response indicating the absence of the corresponding job or returns no response, and ends processing relating to the print-job request received.

When the printer apparatus 30 sends print-job requests sequentially, it is desired that a response indicating the absence of the corresponding job be sent to the printer apparatus 30. If such a response is not sent, the printer apparatus 30 has to wait until timeout for each print-job holding server 20 to which a print-job request has been sent. This causes a processing delay.

Alternatively, information representing a list of corresponding print jobs may be created in advance and sent to the printer apparatus 30 so that the user can select a print job for which the user wishes to execute printing on the basis of the list information. It is desired that a print job that has been sent to the printer apparatus 30 be deleted from the print-job storing unit 21 at a predetermined timing (e.g., a timing of reception of a print completion message from the printer apparatus 30 or after elapse of a predetermined time).

Upon receiving the print job transmitted from the print-job holding server 20 in response to the print-job request in step S503, in step S504, the printer apparatus 30 executes printing on the basis of the print job in a manner similar to an existing printer apparatus. That is, the printer apparatus 30 analyzes the print job and generates a raster print image corresponding to one band or one page and stores the print image in the image buffer, transfers a print image of a predetermined unit (e.g., one pass) from the image buffer to the print engine on the basis of a control command in the print job, and executes printing while controlling the print engine.

As described above, according to this embodiment, the printer apparatus 30 issues an acknowledge request on the basis of a timing of power-on to generate an address list regarding destinations of print-job requests, and sends a print-job request with reference to the address list when an instruction for executing authenticated printing is received. Thus, the user need not specify a destination of a print-job request each time. Furthermore, after the address list is created by issuing an acknowledge request at the timing of power-on, print-job requests can be sent on the basis of the address list. Thus, broadcasting or multicasting need not be executed each time authenticated printing is executed. This serves to reduce consumption of CPU resources on the network.

Furthermore, according to this embodiment, the print-job holding server 20 issues a request for registration to the address list as an initialization process at the time of power-on, and issues a request for removal from the address list as a power-off process. Thus, even when a print-job holding server 20 is activated after the printer apparatus 30 creates the address list so that the device configuration on the network changes, the address list can be updated in accordance with the change. Such updating can also be achieved, for example, by the printer apparatus 30 regularly issuing acknowledge requests. However, when the print-job holding server 20 that has caused a change in the device configuration on the network acts as a trigger for updating the address list as in the embodiment, the address list can be updated timely with minimum communications, so that the load on the network can be restrained. Particularly, when the printer apparatus 30 sends print-job requests sequentially, it is significant to update the address list timely. A failure to update the address list timely could result in an increase in the number of print-job holding servers 20 that are registered in the address list but do not return responses due to power-off or other reasons. The increase in the number of such print-job holding servers 20 that do not return responses results in an increase in the number of times when a response for a print-job request must be waited for until timeout. This causes a processing delay.

### Modifications

The invention is not limited to the embodiment described above, and may be implemented with various modifications. For example, although the embodiment has been described above in the context of an authenticated printing system including a printer apparatus as a printing apparatus, the invention is also applicable to an authenticated printing system including a printing apparatus such as a copying machine, a facsimile machine, or a multifunction machine.

Furthermore, although the host apparatus 10 and the print-job holding server 20 are separate in the embodiment described above, one of these may also have the functions of the other.

Furthermore, for example, in addition to the address list created at the printer apparatus 30 on the basis of an acknowledge request (a first address list), a second address list may be created on the basis of print-job-holding-server information input from a user when a creating instruction is received from the user. In this case, in order to store and manage the second address list separately from the first address list, the second address list is recorded in a storing unit (second list storing unit) separate from the list storing unit (first list storing unit) in which the first address list is stored. Furthermore, the job requesting unit 36 is configured to issue a print-job request to a print-job holding server 20 among the print-job holding servers 20 registered in the first address list and the print-job holding servers 20 registered in the second address list with reference to the first and second list storing unit. In the embodiment described above, since an acknowledge request is basically sent only within a predetermined segment or group, only the print-job holding servers 20 in the predetermined segment or group are registered in the first address list. Thus, the second address list is prepared as described above so that the user can manually register print-job holding serves 20 for issuing print-job requests thereto. This allows executing authenticated printing using a print-job holding server 20 existing outside the segment or the like. Preferably, the second address list is not initialized at the time of power-on so that the user need not enter information on each occasion of power-on.

Furthermore, although the print-job holding server 20 issues a request for registration in the address list as an initialization process that is executed on the basis of a timing of power-on in the embodiment described above, in addition or alternatively to the timing of power-on, a request for registration in the address list may be issued on the basis of a timing of storage of a first print job after the power-on of the print-job holding server 20 (e.g., using storage of the first print job as a trigger), or on the basis of a timing of elapse of a predetermined time since a last registration request.

Furthermore, although the print-job holding server 20 issues a request for removal from the address list as a power-off process in the embodiment described above, in addition or alternatively to the timing of power-off, a request for removal from the address list may be issued on the basis of a timing of turn-off of a function for sending a print job to the printer apparatus 30 (e.g., as part of a deactivation process of the print-job sending unit 22).

Furthermore, although an address list is created as an initialization process that is executed on the basis of a timing of power-on of the printer apparatus 30 in the embodiment described above, in addition or alternatively to the timing of power-on, an address list may be created on the basis of a timing of a first print-job request after the power-on of the printer apparatus 30 (e.g., as preprocessing of the first print-job request when it is determined to issue the first print-job request), or on the basis of a timing of elapse of a predetermined time since last creation of an address list.

The foregoing description has been given by way of example only and it will be appreciated by a person skilled in the art that modifications can be made without departing from the scope of the present invention.

## Claims

1. An authenticated printing apparatus that issues a request for a print job to a job holding apparatus that stores print jobs in association with job-specific information, the print job corresponding to job-specific information obtained from an authenticated user, and that executes printing on the basis of the print job obtained in response to the request, the authenticated printing apparatus comprising:
a first list storing unit that stores first list information of job holding apparatuses as destinations of requests for print jobs;
a first list creating unit that carries out simultaneous communications to check for presence of job holding apparatuses via a communication network and creates the first list information on the basis of results of the simultaneous communications; and
a requesting unit that issues a request for a print job to a print-job holding apparatus registered in the first list information with reference to the first list storing unit, the print job corresponding to job-specific information obtained from an authenticated user.

2. The authenticated printing apparatus according to Claim 1, wherein the first list creating unit creates the first list information on the basis of at least one of a timing of power-on of the authenticated printing apparatus, a timing of a first print-job request after the power-on of the authenticated printing apparatus, and a timing of elapse of a predetermined time since last creation of first list information.

3. The authenticated printing apparatus according to Claim 1 or Claim 2, further comprising:
a second list storing unit that stores second list information of job holding apparatuses as destinations of requests for print jobs; and
a second list creating unit that creates the second list information on the basis of job-holding-apparatus information input by a user when a creating instruction from the user is received;
wherein the requesting unit issues a request for a print job to a print-job holding apparatus among the print-job holding apparatuses registered in the first list information and the print-job holding apparatuses registered in the second list information with reference to the first list storing unit and the second list storing unit, the print job corresponding to job-specific information obtained from an authenticated user.

4. The authenticated printing apparatus according to any one of the preceding claims, wherein the job-specific information includes at least one of a user name, a password, a file name, a date and time of job generation, and a print property.

5. The authenticated printing apparatus according to any one of the preceding claims, further comprising a list updating unit that registers or removes information of a job holding apparatus in or from the first list information stored in the first list storing unit when a request for registration in or removal from the first list information is received from the job holding apparatus.

6. An authenticated printing system comprising:
the authenticated printing apparatus according to Claim 5; and
a plurality of the print-job holding apparatuses.

7. An authenticated printing apparatus according to claim 6, wherein each of the plurality of the print-job holding apparatuses sends a request for registration in the first list information to the authenticated printing apparatus on the basis of at least one of a timing of power-on of the print-job holding apparatus, a timing of storage of a first print job after the power-on of the print-job holding apparatus, and a timing of elapse of a predetermined time since a last request for registration.

8. An authenticated printing system according to claim 6 or claim 7,
wherein each of the plurality of the print-job holding apparatuses sends a request for removal from the first list information to the authenticated printing apparatus on the basis of a timing of power-off of the print-job holding apparatus or a timing of turn-off of a function for sending a print job to the authenticated printing apparatus.

9. An authenticated printing method in which a request for a print job is issued to a job holding apparatus that stores print jobs in association with job-specific information, the print job corresponding to job-specific information obtained from an authenticated user, and in which printing is executed on the basis of the print job obtained in response to the request, the authenticated printing method comprising:
carrying out simultaneous communications to check for presence of job holding apparatuses via a communication network;
creating list information of job holding apparatuses as destinations of requests for print jobs on the basis of results of the simultaneous communications and storing the list information in list storing unit; and
issuing a request for a print job to a print-job holding apparatus registered in the list information with reference to the list storing unit, the print job corresponding to job-specific information obtained from an authenticated user.

10. A program for causing a computer to execute the authenticated printing method according to Claim 9.
